# EUROPEAN PATENT APPLICATION

(11) **EP 1 708 340 A1**
(43) Date of publication of application: **04.10.2006**
(21) Application number: 05425190.5
(22) Date of filing: 01.04.2005
(51) Int. Cl.: H02K 5/22

(54) **Stator for synchronous electric motor**

(71) Applicant: Askoll Holding S.r.l., 36031 Povolaro di Dueville (Vicenza) (IT)
(72) Inventor: Marioni, Elio, 36031 Dueville (Vicenza) (IT)
(74) Representative: Botti, Mario

(57) **Abstract**

Stator for an immersion synchronous electric motor (1) of the type comprising an annular body (5) with a plurality of coils (6) for windings (9), suitable to realise corresponding pole shoes (10), and at least one terminal board (13) for the connection to the ends (11a, 11b) of the conductive wires (12) suitable to realise pairs of windings (9). The terminal board (13) being connected to the annular body (5) in a movable way from a first winding position to a second mounting position by means of a hinge (17) such as a flexible bond.

## Description

### DESCRIPTION

### Field of application

The present invention relates to a stator for synchronous electric motor.

In particular, the invention relates to a stator for synchronous electric motor of the type comprising a permanent magnet internal rotor and an external stator.

More in particular, the invention relates to a stator for a synchronous electric motor of the type comprising an annular body with a plurality of supports for winding conductive wires and at least one terminal board for connecting the ends of each one of said wires.

### Prior art

As it is well known in synchronous electric motors of the above type the stator takes shape of a hollow annular or cylindrical body wherein the permanent magnet rotor is housed.

Generally the stator is housed inside an external container or casing which supports and winds it up, in most cases, made of metal.

The stator exhibits pole shoes mechanically realised by winding conductive wires on suitable coils made in the annular body.

The mechanised winding of each conductive wire is preferably distributed on pairs of opposite coils, realising pairs of windings whose ends, which are on a same side with respect to the stator body, must be suitably supplied.

Several solutions are used for supplying the ends of each conductive wire, for example it is known to manually clamp such ends by means of clamps, for example of the fastom type, by subsequently connecting each clamp to the supply terminal board.

However, such solution exhibits some drawbacks, in fact, it is necessary to pay particular attention during the motor assembling and mounting step due to the presence of the free ends of the conductive wires which can thus move making the operations of connection to the motor supply electronic board difficult.

Moreover, being such clamps manually clamped an increase of the motor assembling and mounting times follows which affect the manufacturing costs.

Another solution of the known type provides the arrangement of a flange associated with the stator body after winding the coils. Such flange exhibits some common connectors in fixed position wherein the winding conductive wire ends are fixed, arranged in such a way as to respect the insulation distance with respect to the container wherein the stator is housed. The same connectors are placed at a predetermined distance both from the motor windings and from the external supply whereto the motor supply electronic board is connected.

Such solution, although advantageous under several aspects, exhibits some drawbacks. In fact, once the windings have been mechanically realised, it is necessary to connect the wire ends to the flange, in correspondence with the connectors and subsequently associate the flange to the stator body. Such operations obviously imply a time extension and an increase of the motor assembling operations with a subsequent increase of the manufacturing costs.

The technical problem underlying the present invention is that of devising a stator for immersion synchronous electric motor having such structural and functional characteristics as to allow a fast and easy assembly of the stator within the corresponding container-casing and a mechanised mounting of the winding wire ends in the corresponding terminal board overcoming the drawbacks still affecting the solutions realised according to the prior art.

### Summary of the invention

The solution idea underlying the present invention is that of realising a stator for a synchronous electric motor of the above described type wherein, according to the invention, the stator body exhibits at least one mobile terminal board the wire ends are mechanically associated with.

On the basis of such solution idea the technical problem is solved by a stator for a synchronous electric motor as previously indicated and defined by the characterising part of claim 1.

The further characteristics and advantages of the stator according to the present invention will be apparent from the following description of an embodiment thereof given by way of indicative and non limiting example with reference to the enclosed drawings.

### Brief description of the drawings

In such drawings:
figure 1 shows an axial schematic view of a synchronous motor incorporating a stator according to the present invention wherein only a pair of pole windings are shown;
figure 2 shows a three-quarter schematic view of a detail of the stator realised according to the present invention, with a terminal board arranged in a first position;
figure 3 shows a three-quarter schematic view of a detail of the stator realised according to the present invention, with a terminal board arranged in a second position;

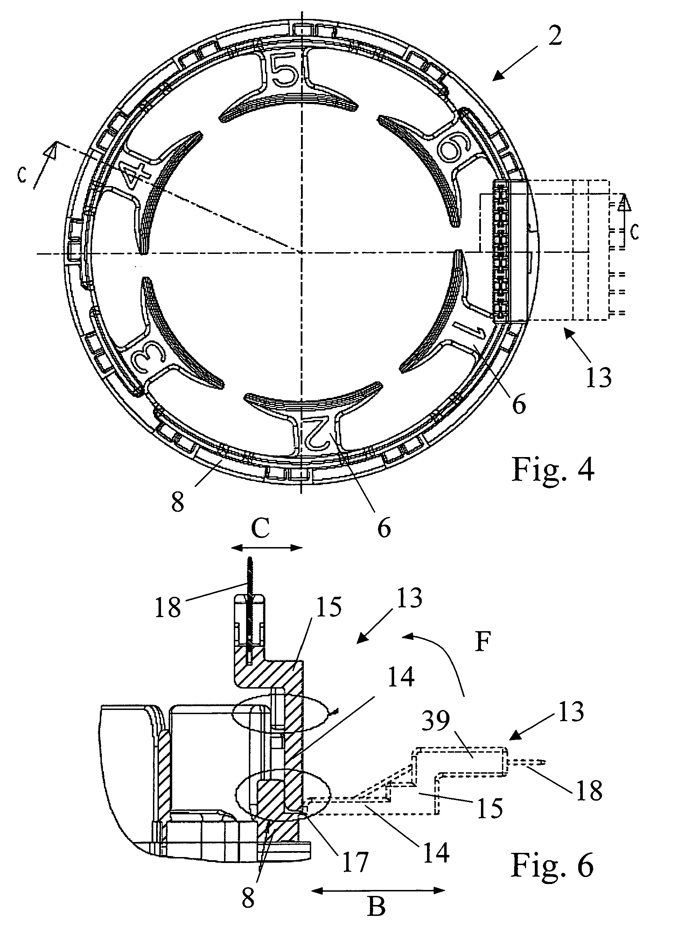

figure 4 shows a schematic view from above of an annular body of a stator realised according to the present invention with a terminal board in two positions respectively a first one, indicated with dot lines, and a second position, indicated with a continuous line;
figure 5 shows a section of the annular body of figure 4 realised according to the section line C-C;
figure 6 schematically shows an enlarged detail of the section of figure 5.

### Detailed description

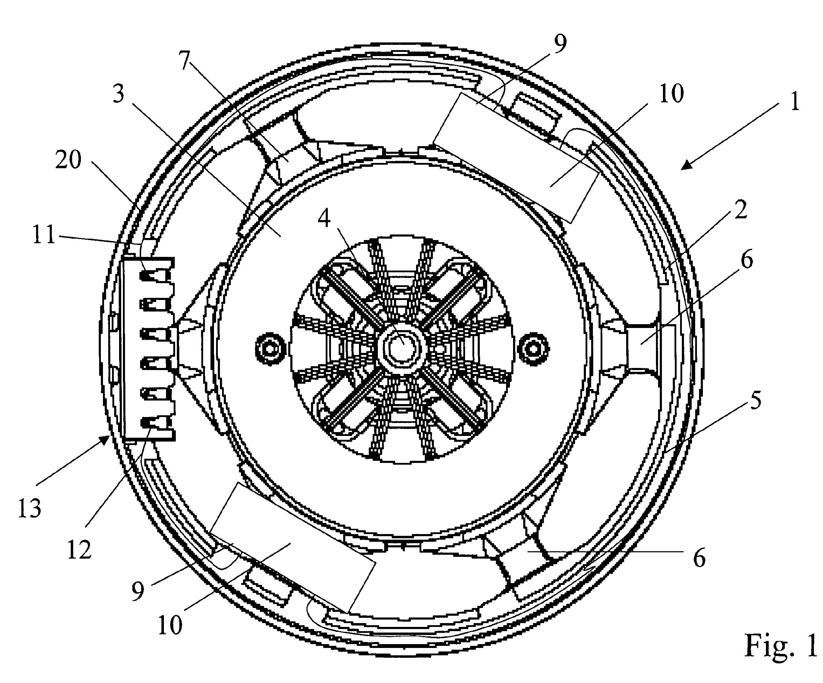

With reference to the annexed figures and particular to figure 1 a synchronous electric motor 1 of the type comprising an external stator 2 realised according to the present invention, and a permanent magnet rotor 3 mounted inside the stator 2 are schematically shown.

As a whole, the rotor 3 has a substantially cylindrical shape and it is integral in rotation with an axial shaft 4 being cylindrical or prismatic and having predetermined diameter.

Suitably, the stator 2 is externally supported by a cylindrical body 20,which serves as container, generally made of metal, which peripherally winds it up.

The stator 2 comprises an annular body 5, preferably made of plastics, with a plurality of supports 6, called coils, which, in the case shown in the present embodiment, are six. The plurality of coils 6 radially projecting from the annular body 5, towards the internal part, are arranged in a symmetric way and they are equidistant from each other at a predetermined distance by from an upper edge 8 of the annular body 5.

The coils 6 comprise terminal parts 7 widened and shaped in such a way that during the assembly with the rotor 3 placed inside the stator 2 they wind the rotor 3 externally, as highlighted in figure 1.

The plurality of coils 6 of the annular body 5, wound up by suitable conductive wires 12 realise pairs of windings 9. The ends 11 a and 11b of all the conductive wires 12, wound in pairs of opposite coils 6, must be suitably supplied during the motor 1 operation for example by means of a connection to a terminal board 13.

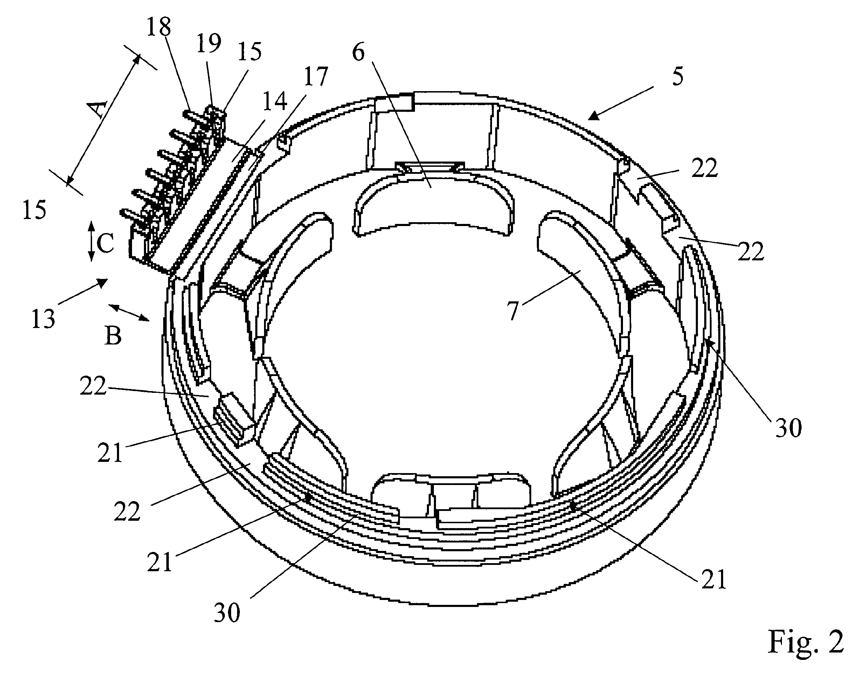

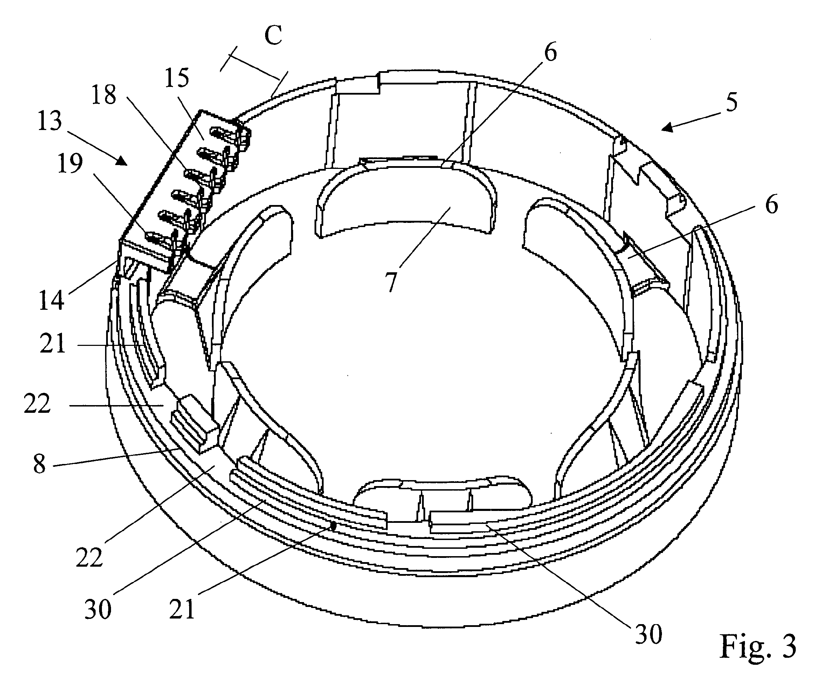

Advantageously, according to the present embodiment, the terminal board 13 of the stator 2, as schematically highlighted in figures 2 and 3, is associated with the annular body 5 in a movable way from a first position to a second position.

In other words, when the terminal board 13 is in its first position, called winding position, the mechanised winding of the wires 12 on the coils 6 takes place.

When instead the terminal board 13 is in its second position, called mounting position, the stator 2 is in such a configuration as to allow the motor 1 assembly.

The terminal board 13, according to a preferred embodiment, is associated with the annular body 5 by means of a hinge, which in the example, is realised by a flexible bond 17.

Advantageously, the flexible bond 17 is integrally realised with the annular body 5 and with the terminal board 13.

Preferably, the terminal board 13 is L-like shaped comprising a first tongue 14 and a second tongue 15.

Suitably, the terminal board 13 exhibits the first tongue 14 and the second tongue 15 with a same width "A" and a length respectively indicated with "B" and "C" as shown in figure 2.

Advantageously, the first tongue 14 is associated with an upper edge 8 of the annular body 5 by means of the flexible bond 17, whereas the second tongue 15 exhibits a plurality of connecting pins 18 projecting externally with respect to the annular body 5 and arranged in parallel to the first tongue 14. In such way, when the terminal board 13 is in the first winding position, shown in figure 2, it exhibits the first tongue 14 radially projecting from the annular body 5.

Whereas, when the terminal board 13 is in the second mounting position, shown in figure 3, the second tongue 15 is radially tentered on the annular body 5 of the stator 2. Advantageously, with the terminal board 13 in the second position, the pins 18, arranged on the annular body 5, detach from the peripheral edge 8 of the annular body 5 of a distance being substantially equal to the length "C" of the second tongue 15.

The terminal board 13, in a different shape, schematically shown in figures from 4 to 6, comprises an appendix 39 projecting from the second tongue 15 and arranged in parallel to the first tongue 14, departing from the annular body 5.

From the appendix 39 a plurality of extending pins 18 protrude, the pins being apt to allow the connection to a supply board.

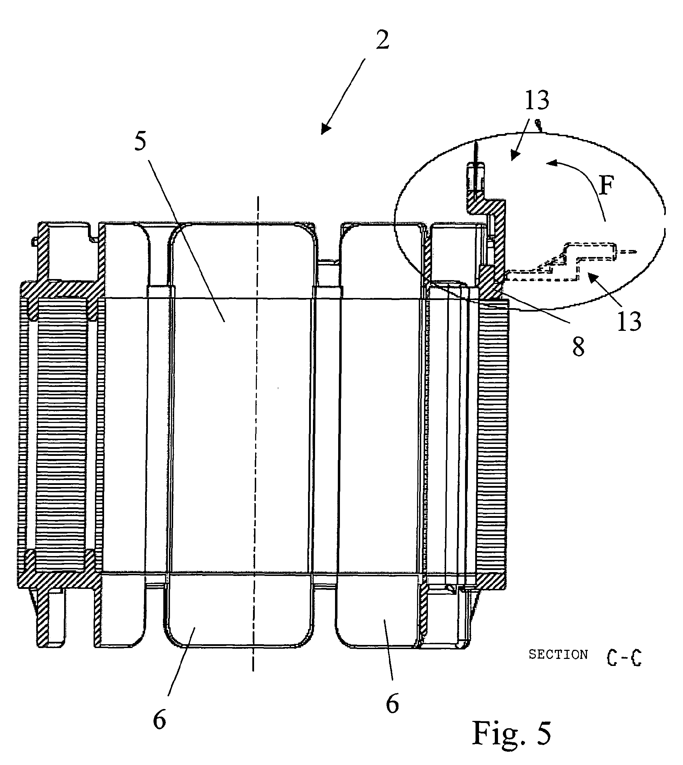

Advantageously, in the passage of the terminal board 13 from the first winding position to the second mounting position, the terminal board 13 follows the path indicated by the arrow F shown in figures 5 and 6.

Suitably, the number of pins 18 corresponds to the number of the supports 6 of the pole shoes 10 and, in the shown case, they are six.

The pins 18 can exhibit different shapes according to the user's needs. Suitably, the second tongue 15 of the terminal board 13 exhibits a plurality of seats 19 of the ends 11a and 11b of each wire 12 for the connection to one of said pins 18.

Each end 11a and 11b, of each conductive wire 12, is mechanically connected to one of said pins 18 and it is fixed thereto, according to different modes, such as for example a tinning point, or by mechanical block.

Advantageously, the annular body 5 of the stator 2 according to a preferred embodiment, comprises a plurality of step-like shaped projections 21 being extended in annular sectors 30, on the upper edge 8. The projections 21 define paths, external to the annular body 5, for the passage of the conductive wires 12, which define winding pairs 9, as in particular highlighted in figures 2 and 3.

The projections 21 close to each coil 6 exhibit prearranged holes 22 which allow the input of a wire 12 suitable to realise a winding 9 on the coil 6, the output of the wire 12 itself for reaching, by means of prearranged path on the projections 21, an opposite coil 6 for the realisation of a pair of pole shoes 10. The holes 22 and the paths on the projections 21 allow the ends 11a and 11b of the wire 12 to reach, outside the annular body 5, the terminal board 13 in correspondence with prearranged pins 18.

The holes 22, according to a preferred embodiment, are two for each coil 6 except for the coils 6 arranged close to the terminal board 13, in such case only one hole 22 can be realised, one of the two ends 11a and 11b of the wire 12 being connectable to the terminal board 13 by means of a path inside the annular body 5.

The plurality of projections 21 thus allow to realise obliged paths for each wire 12 of each pair of pole shoes 10, to avoid possible overlappings with other wires 12. Suitably, the projections 21 defining each path of each wire 12 will be arranged at the same distance from the upper edge 8 of the annular body 5.

Advantageously, during the mechanised realisation of all the pole shoes 10 of the stator 2, when the terminal board 13 is in the first winding position, with the first tongue 14 projecting from the annular body 5, it facilitates the mechanised connection operations of the ends 11a and 11b of the wires 12 of each winding 9, which are mechanically inserted and associated with a prearranged pin 18 of the terminal board 13.

Once all the pairs of pole shoes 10 of the stator 2 are realised, the pins 18 of the terminal board 13 will be electrically connected to the windings 9.

At this point, the terminal board 13 can be placed, always mechanically, in the second mounting position with the second tongue 15 standing over the annular body 5 and the pins 19 on the annular body 5 projecting outwards to allow a quick and fast connection to the supply board.

Moreover, by suitably realising the second tongue 15 with a length of suitable value "C", when the terminal board 13 is in the second mounting position the pins 18 and the ends 11a, 11b of the wires 12 meet the current safety rules of minimal distance of about 2,5 mm from the container 20 external to the stator to avoid current leaks during the operation of the motor 1.

Main advantage of the present invention is that of having realised a stator with a terminal board associated with the annular body and being movable from a first winding position, suitable to allow an easy, a fast and a mechanised connection of the stator winding ends to the terminal board pins, to a second mounting position, which allows a quick and fast mounting of the motor 1 and an as much easy and fast connection of the terminal board to the supply electrical board.

A further advantage of the present invention is that of having realised a stator comprising a terminal board with a flexible, mobile bond, being integrally made with the annular body, which allows to easily, quickly and mechanically shift the terminal board from the first winding position to the second mounting operative position.

Another great advantage is that of having realised a simple and cheap stator comprising a terminal board which, arranged in the first winding position, thanks to its shape, external to the annular body, does not limit and does not exhibit any obstacles to the mechanical realisation of the windings and also allows a mechanised connection of the ends to the conductive wires of the terminal board allowing to be easily displaced in the second mounting position.

Another advantage is that the stator exhibits a terminal board which allows to meet the current rules related to the minimal distances to be respected as regards the presence of metallic containers external to the stator, in fact, the length "C" of the second tongue can be realised with desired sizes without invalidating in any way the mechanised operations of winding the wires or connecting the ends to the terminal board.

Obviously, the present invention is liable to several modifications in particular the second tongue 15 of the terminal board 13 mobile from a first winding position to a second mounting position will also exhibit different embodiments to meet the different user's needs at best.

## Claims

1. Stator for an immersion synchronous electric motor (1) of the type comprising an annular body (5) with a plurality of coils (6) for winding conductive wires (12) each defining pairs of windings (9) and at least one terminal board (13) for the connection of the ends (11a, 11b) of each one of said wires (12) **characterised in that** said at least one terminal board (13) is associated with said annular body (5) in a movable way from a first winding position of said wires (12) in said coils (6) to a second mounting position of said motor (1).

2. Stator according to claim 1, **characterised in that** said at least one terminal board (13) is associated with said annular body (5) by means of a hinge (17).

3. Stator according to claim 2, **characterised in that** said at least one terminal board (13) comprises a flexible bond (17) integrally realised with said annular body (5) and with said at least one terminal board (13), said bond (13) constituting said hinge.

4. Stator according to claim 3, **characterised in that** said terminal board (13) is L-like shaped comprising a first tongue (14) and a second tongue (15), said first tongue (14) associated with an upper edge (8) of said annular body (5) by means of said bond (17) and said second tongue (15) exhibiting a plurality of pins (18) protruding externally with respect to said annular body (5) and arranged in parallel to said first tongue (14), said pins (18) being of connection for said ends (11 a, 11b) of said conductive wires (12).

5. Stator according to claim 4, **characterised in that** said terminal board (13) in said first winding position exhibits said first tongue (14) radially projecting from said annular body (5).

6. Stator according to claim 4, **characterised in that** said at least one terminal board (13) arranged in said second mounting position exhibits said second tongue (15) radially tentered on said annular body (5).

7. Stator according to claim 4, **characterised in that** said at least one terminal board (13) exhibits in said second tongue (15) a plurality of seats (19) for said ends (11a, 11b) of said wires (12) allowing the mechanised connection with said pins (19).

8. Stator according to claim 7, **characterised in that** said pins (18) are as many as said coils (6) of said windings (9) are.

9. Stator according to claim 8, **characterised in that** said second tongue (15) of said at least one terminal board (13) exhibits a length "C" longer than 2,5 mm.

10. Stator according to one or more of the preceding claims, **characterised in that** said second tongue (15) of said terminal board (13) comprises an appendix (39) being arranged in parallel to said first tongue (14) departing from said annular body (5) said appendix (39) comprising a plurality of extending pins (18) suitable to allow the connection to a supply board.

11. Stator according to one or more of the preceding claims, **characterised in that** said annular body (5) in correspondence with said upper edge (8) comprises a plurality of step-like shaped projections (21) being extended in annular sectors (30) alternated by holes (22), said plurality of projections (21) defining paths for said wires (12) of said windings (9).

12. Stator according to claim 11, **characterised in that** each one of said paths for said wires (12) of said windings (9) is arranged at the same distance from said upper edge (8) of said annular body (5).
